(19) Europäisches Patentamt
European Patent Office
Office européen des brevets

(11) Publication number: **0 098 641**
**B1**

(12) # EUROPEAN PATENT SPECIFICATION

(45) Date of publication of patent specification: **15.03.89**

(51) Int. Cl.$^4$: **C 01 B 33/28**

(21) Application number: **83200948.4**

(22) Date of filing: **27.06.83**

(60) **Divisional application 87202093 filed on 30.10.07.**

(54) **Process for preparing ZMS-5 zeolites.**

(30) Priority: **01.07.82 IT 2217682**

(43) Date of publication of application:
**18.01.84 Bulletin 84/03**

(45) Publication of the grant of the patent:
**15.03.89 Bulletin 89/11**

(84) Designated Contracting States:
**AT BE CH DE FR GB LI NL SE**

(56) References cited:
**EP-A-0 040 104**
**US-A-4 175 114**
**US-A-4 257 885**

(73) Proprietor: **SNAMPROGETTI S.p.A.**
**Corso Venezia 16**
**I-20121 Milan (IT)**

(72) Inventor: **Notari, Bruno**
**Via Piadena 6**
**I-20097 S. Donato Milanese (Milan) (IT)**
Inventor: **Manara, Giovanni**
**Via Agadir 18/B**
**I-20097 S. Donato Milanese (Milan) (IT)**
Inventor: **Bellussi, Giuseppe**
**Via Valmagini 19**
**I-29100 Piacenza (IT)**
Inventor: **Taramasso, Marco**
**deceased (IT)**

(74) Representative: **Roggero, Sergio et al**
**Ing. Barzanò & Zanardo Milano S.p.A. Via Borgonuovo 10**
**I-20121 Milano (IT)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a process for preparing the ZMS—5 zeolite.

Zeolites having an $SiO_2$:$Al_2O_3$ ratio as high as 10 and greater are endowed with a high thermal stability, which makes them suitable for a wide variety of practical applications.

Zeolites of the kind referred to above are characterized by structural sub-units composed of 5-tetrahedron rings: examples of these zeolites are those of the mordenite family, which encompasses ferrierite, dachiardite, epistilbite and bikitaite.

By templating with organic substances, such as tetraalkylammonium derivatives, alcohols, ethers and amines, special zeolites can be prepared and one of these is the well known ZMS—5 zeolite, which also contains 5-tetrahedron rings.

Purely siliceous structures, such as silicalite-1, silicalite-2 and analogs, have been obtained by templating with tetraalkylammonium derivatives, since the use of a purely inorganic system would have produced quartz or metastable crystalline silicas which finally evolve into quartz.

An attempt to reduce the quantity of the tetraalkylammonium cation when preparing ZMS—5 zeolite has been made in the US—A—4 175 114, according to which germs of ZMS—5 zeolite, concurrently with either alcohol, ammonium hydroxide, or both alcohol and ammonium hydroxide, or even alcohol alone, or alcohol and ammonium hydroxide alone, have been employed.

The teaching of the US—A—4 175 114 is, in summation, that ZMS—5 germs cannot be dispensed with whenever alcohols or ammonia-based substances are not used for templating.

In addition, such crystallization germs or nuclei must be very charily selected as to their size and quantity.

The EP—A—30811 has suggested to synthesize zeolite aluminosilicates with a silica: alumina molar ratio greater than 12 without using organic compounds such as alcohols, tetraalkylammonium ions or alkylene oxides.

Ammonia, ammonium hydroxide or ammonium salts are also used to obtain the formation of the expected zeolite.

US—A—4 257 885 discloses a novel synthetic zeolite which is prepared without using any organic substances or ammonium compounds, but using, instead, colloidal silica as the silicon source.

All of these processes are cumbersome and intricate, so that a simplified process for producing ZMS—5 zeolite was a long felt want.

According to the invention, there is provided a process for the preparation of a ZMS-zeolite having in its anhydrous condition the formula:

$$Me_20.Al_2O_3.xSiO_2$$

wherein Me is an alkali metal and $x$ is between 20 and 40, characterized by comprising the steps of contacting, in an aqueous medium, sodium silicate with an aluminium compound, the molar ratio of $SiO_2$ to $Al_2O_3$ being comprised between 20 and 50, in the presence of one or more alkali metal hydroxides, the molar ratio of $Me^+$ to $SiO_2$ being higher than 0,6, and also in the presence of a mineralizing agent, working at a temperature between 20°C and 100°C, checking that the molar ratio $OH^-$ to $SiO_2$ of the mixture thus obtained is comprised between 0,05 and 0,3, and causing said resultant mixture to crystallize with said hydroxyl to $SiO_2$ molar ratio in an enclosure for a period of from a few hours to 40 days, at a temperature comprised between 100°C and 200°C.

A preferable condition is that the molar ratio of $Me^+$ to $SiO_2$ is between 0,66 and 0,96.

Still preferably, the molar ratio of $SiO_2$ to $Al_{203}$ is between 25 and 40, and that the molar ratio of $OH^-$ to $SiO_2$ is comprised between 0,10 and 0,20.

Yet preferably, the crystallization temperature is between 150°C and 180°C.

Preferred among the mineralizing agents are sodium sulphate, potassium sulphate, sodium phosphate, potassium phosphate, sodium chloride and potassium chloride.

Among the alkali metal hydroxides, LiOH, NaOH and KOH are preferred, and preferred aluminium compounds are sodium aluminate, aluminium sulphate, aluminium chloride and trihydrous alumina. It has thus become possible, by virtue of the teachings of the present invention, to synthesize high-silica zeolites by using cheap materials, such as sodium silicate, as the silicon source, without using any organic substances or ammonium compounds.

Certain critical factors, of course, need to be checked, such as the $SiO_2 : Al_2O_3$ ratio: also the molar ratio of the hydroxyl concentration (determined by titration) to silica, $OH^-$: $SiO_2$, must be controlled within the range specified in the appended claims. The process according to this invention, contrary to the conventional methods for preparing ZMS—5 zeolites (see for example US—A—3 702 886 and US—A—4 014 245) show little dependence on the nature and the dimension of the cation and be carried out in the presence of $Li^+$, $Na^+$ or $K^+$ cations and their mixtures without suffering from any adverse effect.

The zeolites obtained according to the process of the present invention do not differ structurally from those prepared according to the conventional methods but they can be converted into the acidic form or be exchanged with various cations and used in all the typical practical applications which are usual for ZMS—5 zeolites of conventional make.

A few examples will follow in order to better illustrate the practical performance of the process according to the invention for preparing ZMS—5 zeolites.

General procedure

The reaction mixture is prepared with sodium silicate (26,03% of $SiO_2$, 8,97% of $Na_2O$ and 65% of $H_2O$ on a weight basis) and aluminium sulphate $Al_2$ $(SO_4)_3.16H_2O$ ($Al_3O_3$ 17% by wt).

Sodium silicate is dissolved in distilled water which contains the quantity of NaOH which is required to obtain the expected $OH^-$: $SiO_2$ ratio, while aluminium sulphate is dissolved separately in water, optionally acidified with sulphuric acid.

The latter solution is added to the former with vigorous stirring and the combined solutions are heated to 80°C.

A gel is thus obtained, to be transferred into an autoclave, wherein it is held at a temperature of 176°C with stirring.

Examples 1 to 4

The reactants, the crystallization time and the kind of ZMS—5 zeolite so produced are tabulated in Table 1 which contains the Examples 1 to 4.

The general procedure reported above is followed in Examples, 1, 2 and 3, the silica and alumina sources being just sodium silicate and aluminium sulphate. Example 4 differs from the previous ones in that sodium silicate, aluminium chloride and hydrochloric acid are used.

The considerably longer crystallization time of the pure ZMS—5 zeolite of Example 4 is due to the presence of $Cl^-$ ion in lieu of the $SO_4^{--}$ ion.

The molar ratios $SiO_2$ : $Al_2O_3$ of the ZMS—5 zeolites varied between 24 and 27.

TABLE 1

| Example No. | Composition of reaction mixture: $R\frac{SiO_2}{Al_2O_3}$ | $R\frac{Na^+}{SiO_2}$ | $R\frac{H_2O}{SiO_2}$ | $R\frac{X}{SiO_2}$ | Others g/mole $SiO_2$ | $OH^-/SiO_2$ | Cryst. time days | Product obtained |
|---|---|---|---|---|---|---|---|---|
| 1 | 30 | 0.74 | 90 | 0.224[a] | — | 0.178 | 6 | ZSM5 + mordenite traces |
| 2 | 35 | 0.66 | 90 | 0.223[a] | — | 0.100 | 14 | ZSM5 + mordenite traces |
| 3 | 40 | 0.67 | 39 | 0.160[a] | — | 0.200 | 11 | Pure ZSM5 |
| 4 | 40 | 0.67 | 69 | 0.390[b] | — | 0.104 | 21 | Pure ZSM5 |

a: $X = SO_4^{--}$
b: $X = Cl^-$

## Claims

1. A process for the preparation of a ZMS-zeolite having in its anhydrous condition the formula:

$$Me_20.Al_2O_3.xSiO_2$$

wherein Me is an alkali metal and $x$ is between 20 and 40, characterized by comprising the steps of contacting in an aqueous medium, sodium silicate with an aluminium compound, the molar ratio of $SiO_2$ to $Al_2O_3$ being comprised between 20 and 50, in the presence of one or more alkali metal hydroxides, the molar ratio of $Me^+$ to $SiO_2$ being higher than 0,6, and also in the presence of a mineralizing agent, working at a temperature between 20°C and 100°C, checking that the molar ratio $OH^-$ to $SiO_2$ of the mixture thus obtained is comprised between 0,05 and 0,3, and causing said resultant mixture to crystallize with said hydroxyl to $SiO_2$ molar ratio in an enclosure for a period of from a few hours to 40 days, at a temperature comprised between 100°C and 200°C.

2. Process according to claim 1, characterized in that the molar ratio of $Me^+$ to $SiO_2$ is comprised between 0,66 and 0,96.

3. Process according to claim 1, characterized in that the molar ratio of $SiO_2$ to $Al_2O_3$ is comprised between 25 and 40, and the molar ratio of $OH^-$ to $SiO_2$ is comprised between 0,10 and 0,20.

4. Process according to claim 1, characterized in that the crystallization temperature is comprised between 150°C and 180°C.

5. Process according to claim 1, characterized in that the mineralizing agents are selected from among sodium sulphate, potassium sulphate, sodium phosphate, potassium phosphate, sodium chloride and potassium chloride.

6. Process according to claim 1, characterized in that the alkali metal hydroxides are selected from among LiOH, NaOH and KOH.

7. Process according to claim 1, characterized in that the aluminium compound is selected from among sodium aluminate, aluminium sulphate, aluminium chloride, and trihydrous alumina.

## Patentansprüche

1. Verfahren zur Herstellung eines ZMS-5-Zeolithen, der in seiner wasserfreien Form der Formel:

$$Me_2O.Al_2O_3.xSiO_2$$

entspricht, worin Me ein Alkalimetall bedeutet und $x$ einen Wert von 20 bis 40 aufweist, dadurch gekennzeichnet, daß es die Stufen des In-Berührung-Bringens von Natriumsilikat mit einer Aluminiumverbindung in einem wäßrigen Medium, wobei das Molverhältnis von $SiO_2$ zu $Al_2O_3$ von 20 bis 50 beträgt, in Gegenwart eines oder mehrerer Alkalimetallhydroxide, wobei das Molverhältnis von $Me^+$ zu $SiO_2$ größer als 0,6 ist, und in Gegenwart eines Mineralisierungsmittels, ein Arbeiten bei einer Temperatur von 20°C bis 100°C, ein Einhalten des Molverhältnisses $OH^-$ zu $SiO_2$ des solcherart gebildeten Gemisches zwischen 0,05 und 0,3 und ein Herbeiführen des Kristallisierens des gebildeten Gemisches mit dem erwähnten Hydroxyl/$SiO_2$-Molverhältnis in einem Behälter während einer Zeitdauer von einigen wenigen Stunden bis zu 40 Tagen bei einer Temperatur von 100°C bis 200°C umfaßt.

2. Verfahren nach Anspruch 1, dadurch gekennzeichnet, daß das Molverhältnis $Me^+$ zu $SiO_2$ von 0,66 bis 0,96 beträgt.

3. Verfahren nach Anspruch 1, dadurch gekennzeichnet, daß das Molverhältnis $SiO_2$ zu $Al_2O_3$ von 25 bis 40 beträgt und das Molverhältnis $OH^-$ zu $SiO_2$ von 0,10 bis 0,20 beträgt.

4. Verfahren nach Anspruch 1, dadurch gekennzeichnet, daß die Kristallisationstemperatur zwischen 150°C und 180°C liegt.

5. Verfahren nach Anspruch 1, dadurch gekennzeichnet, daß die Mineralisierungsmittel unter Natriumsulfat, Kaliumsulfat, Natriumphosphat, Kaliumphosphat, Natriumchlorid und Kaliumchlorid ausgewählt werden.

6. Verfahren nach Anspruch 1, dadurch gekennzeichnet, daß die Alkalimetallhydroxide unter KiOH, NaOH und KOH ausgewählt werden.

7. Verfahren nach Anspruch 1, dadurch gekennzeichnet, daß die Aluminiumverbindung unter Natriumaluminat, Aluminiumsulfat, Aluminiumchlorid und Aluminiumoxidtrihydrat ausgewählt wird.

## Revendications

1. Procédé de préparation d'une zeolite ZMS—5 répondant, à l'état anhydre, à la formule:

$$Me_2O.Al_2O_3.xSiO_2$$

dans laquelle Me est un métal alcalin et $x$ est entre 20 et 40, caractérisé en ce qu'il comprend les étapes consistant à mettre en contact, dans un milieu aqueux, du silicate de sodium avec un dérivé d'aluminium,

le rapport molaire de $SiO_2$ à $Al_2O_3$ étant compris entre 20 et 50, en présence d'un ou plusieurs hydroxydes d'un métal alcalin, le rapport molaire de $Me^+$ à $SiO_2$ étant supérieur à 0,6, et aussi en présence d'un agent de minéralisation, à travailler à une température entre 20°C et 100°C, à vérifier que le rapport molaire de $OH^-$ à $SiO_2$ du mélange ainsi obtenu est compris entre 0,05 et 0,3 et à faire cristalliser ledit mélange résultant avec ledit rapport molaire hydroxyle à $SiO_2$ dans une enceinte pendant une durée de quelques heures à 40 jours, à une température comprise entre 100°C et 200°C.

2. Procédé selon la revendication 1, caractérisé en ce que la rapport molaire de $Me^+$ à $SiO_2$ est compris entre 0,66 et 0,96.

3. Procédé selon la revendication 1, caractérisé en ce que le rapport molaire de $SiO_2$ à $Al_2O_3$ est compris entre 25 et 40 et le rapport molaire de $OH^-$ à $SiO_2$ est compris entre 0,10 et 0,20.

4. Procédé selon la revendication 1, caractérisé en ce que la température de cristallisation est comprise entre 150°C et 180°C.

5. Procédé selon la revendication 1, caractérisé en ce que les agents de minéralisation sont choisis parmi le sulfate de sodium, le sulfate de potassium, le phosphate de sodium, le phosphate de potassium, le chlorure de sodium et le chorure de potassium.

6. Procédé selon la revendication 1, caractérisé en ce que les hydroxydes de métal alcalin sont choisis parmi LiOH, NaOH et KOH.

7. Procédé selon la revendication 1, caractérisé en ce que le dérivé de l'aluminium est choisi parmi l'aluminate de sodium, le sulfate d'aluminium, le chlorure d'aluminium et l'alumine trihydratée.